# EUROPÄISCHE PATENTSCHRIFT

(11) **EP 1 630 238 B1**
(45) Veröffentlichungstag und Bekanntmachung des Hinweises auf die Patenterteilung: **07.03.2007**
(21) Anmeldenummer: 04023771.1
(22) Anmeldetag: 06.10.2004
(51) Int. Cl.: C21C 5/52, C21C 5/00, C22B 7/04, C21C 5/36, C22B 5/04

(54) **Verfahren zur Rückgewinnung von metallischen Elementen aus metalloxidhaltigen Schlacken**
Method of recovering metallic elements from slag containing metaloxides
Procédé pour la récupération d'éléments métalliques a partir de laitiers d'oxydes métalliques

(30) Priorität: 30.08.2004 DE 10350959
(43) Veröffentlichungstag der Anmeldung: 01.03.2006
(73) Patentinhaber: SMS Demag Aktiengesellschaft, 40237 Düsseldorf (DE); Thyssen Krupp Acciai Speciali Terni S.p.A., 05100 Terni (IT)
(72) Erfinder: Reichel, Johann, Dr., 40489 Düsseldorf (DE); Rollinger, Bernt, 65232 Taunusstein (DE); Capotosti, Romeo, 05020 Narni (IT); Vespasiani, C., Dr., 05100 Terni (IT); DeCiantis, L., 05100 Terni (IT)
(74) Vertreter: Klüppel, Walter

(56) Entgegenhaltungen:
- EP-A- 1 126 039
- WO-A-00/79014
- RU-C- 2 082 785
- PATENT ABSTRACTS OF JAPAN Bd. 2002, Nr. 12, 12. Dezember 2002 (2002-12-12) & JP 2002 235124 A (NIPPON STEEL CORP), 23. August 2002 (2002-08-23)
- ÖSTBERG: "oN THE APPLICATION OF THE PERRIN PROCESS FOR THE FERRO-ALLOY PRODUCTION" SCANDINAVIAN JOURNAL OF METALLURGY, Bd. 32, 2003, Seiten 157-170, XP002302712

## Beschreibung

Die Erfindung betrifft ein Verfahren zur Rückgewinnung von metallischen Elementen, insbesondere metallischem Chrom, aus metalloxidhaltigen Schlacken bzw. ein Verfahren zur Reduktion der Metalloxide in der Schlacke während des Herstellungsprozesses von chromhaltigen Stählen in einem Elektrolichtbogenofen.

Bei dem konventionellen Herstellungsprozess von hochchromhältigen Stählen in einem Elektrolichtbogenofen wird die Oxidation der Metalle und insbesondere von Chrom durch Sauerstoff verursacht, der entweder in den Ofen eingeblasen wird oder in der Umgebungsluft enthalten ist. Die Entkohlung des chargierten Materials während der Schmelzphase findet unter anderem durch eine Reduktion der Chromoxide durch in der Schmelze gelösten Kohlenstoff statt.

Aufgrund der nicht vollständigen Reduktion der Chromoxide während der Entkohlung geht ein Teil der Oxide in Form von verschiedenen Spinellen in die Schlacke über. Da der Gehalt des Reduktionsmittels Kohlenstoff mit der Zeit abnimmt, sinkt der Reduktionsgrad des Chromoxids.

Die Wirtschaftlichkeit des Schmelzprozesses bei der Herstellung von chrom- oder chromnickelhaltigen Stählen hängt zu einem großen Teil von der Fähigkeit ab, das in der Schlacke gebundene Chrom zurückzugewinnen. Aus diesem Grunde ist es ren und zwar nach der Beendigung des Sauerstoff-Einblasens durch Reduktion der Schlacke mit einem Element von hoher Affinität zu Sauerstoff, wie zum Beispiel Silizium in Form von FeSi.

Weil die Reduktion eine chemische Reaktion ist - die an der Phasengrenze Metall-Schlacke stattfindet ― ist sie in hohem Maß von der Reaktionsoberfläche abhängig, die deshalb den hauptsächlichen Einflussfaktor bei der Reaktionseffizienz bildet. Heftige Turbulenzen des Metalls und der Schlacke mit intensiven Durchmischungen verbessern alle Reaktionsbedingungen. In einem Elektrolichtbogenofen wird dies herkömmlicherweise durch Verwendung von Bodenrührvorrichtungen mit Inertgas erreicht, wie dies beispielsweise aus der US 4,090,869 bekannt ist. Bei der Herstellung von chromhaltigen Stählen in einem Elektrolichtbogenofen wird die Reduktion der Chromoxide in der Schlacke dadurch erreicht, dass Inertgas entweder durch Düsen oder Lanzen zur Durchmischung eingeblasen wird.

Ausgehend von diesem Stand der Technik liegt der Erfindung die Aufgabe zugrunde, ein einfacheres und wirtschaftlicheres Verfahren zur Wiedergewinnung von Metallen aus der Schlacke, insbesondere des teuren Chroms, bereitzustellen.

Diese Aufgabe wird das Verfahren mit den Merkmalen des Anspruchs 1 gelöst. Vorteilhafte Weiterentwicklungen sind in den Unteransprüchen beschrieben.

Nach dem Grundgedanken der Erfindung wird die Schlacke im Elektrolichtbogenofen nicht vollständig reduziert, sondern nur teilweise, und diese teilreduzierte Schlacke wird in eine Stahlpfanne abgestochen. In diese, mit der Schlacke teilweise gefüllten Pfanne, wird anschließend Schmelze aus dem Ofen abgestochen, wobei die sich bei dem Einfüllvorgang ergebende Durchmischung der Schlacke und Schmelze dazu führt, dass die Reduktion der Schlacke fortgesetzt wird und ein hoher Reduktionsgrad der Schlacke erreicht ist. Aufgrund der Schüttbewegung der Schmelze in die Pfanne kommt es zu einem intensiven Rühreffekt zwischen der vorher entfernten Schlacke und der abgestochenen Stahlschmelze. Der Rühreffekt ist mit einer intensiven Durchmischung verbunden, so dass eine große Reaktionsoberfläche zwischen Metall und Schlacke erreicht wird, die eine weitere starke Reduktion der Schlackenoxide bewirkt, wobei der Reduktionsgrad drastisch erhöht wird.

Eine solche mit Schmelze und Schlacke, die zu hohem Grad reduziert ist, gefüllte Pfanne wird anschließend einer bekannten Vakuum-Behandlung oder einer AOD-Anlage zugeführt. Vorher wird die Schlacke abgezogen.

Für diese Bereitstellung von Schlacke und Schmelze in einer Pfanne wird diese zwischen einer Abschlackposition und einer Abstech- und Durchmischungsstation mittels eines Transferwagens verfahren. Der Transferwagen ist unterhalb des Elektrolichtbogenofens zwischen der Schlackentürseite des Ofens und der Abstechseite oder der Abstichöffnung, die auch eine mittige oder exzentrische Bodenabstichöffnung sein kann, verfahrbar angeordnet, vorzugsweise über ein Schienenpaar.

Mit Hilfe der Erfindung ist ein hoher Rückgewinnungsgrad an Metallen, insbesondere an Chrom, erreichbar. Dies zeigt neben dem wirtschaftlichen Gesichtspunkt auch den Vorteil, dass der Gehalt an Cr₂O₃ in der Schlacke, das auf Halde zu Cr⁶⁺-lonen dissoziiert, die toxische Eigenschaften aufweisen, vermindert wird.

Auf Grund der Tatsache, dass unmittelbar in die Stahlpfanne abgestochen wird, wird keine separate Schlackenpfanne benötigt. Die damit zusammenhängende Logistik am Elektrolichtbodenofen kann eingespart werden.

Da die Reduktion der Schlacke mit der Durchmischung von Schlacke und Schmelze beim Abstechvorgang der Schmelze in die Pfanne gekoppelt wird, erhöht sich die Effizienz, so dass die Mengen an Reduktionsmittel (FeSi, Al oder Kohlenstoff) reduziert werden können.

Das Verfahren schließt ein, sowohl eine während des Einschmelzvorgangs neu gebildete Schlacke als auch eine Schlacke, die vor dem Einschmelzschritt der Charge bereits im Ofengefäß vorhanden war, teilweise zu reduzieren.

Das Verfahren kann auch in einer Anlage mit zwei Elektrolichtbogenöfen durchgeführt werden, in denen zeitlich versetzt der Schmelzprozess sowie ein entkohlendes Verblasen durchgeführt werden, wobei eine solche Anlage per se aus der DE 196 21 143 A1 bekannt ist.

Weitere Einzelheiten und Vorteile der Erfindung ergeben sich aus den Unteransprüchen und aus der nachfolgenden Beschreibung. Hierbei wird das erfindungsgemäße Verfahren mit Hilfe einer Figur erläutert, die einen Elektrolichtbogenofen mit darunter angeordneter Pfanne in einem Transferwagen zeigt.

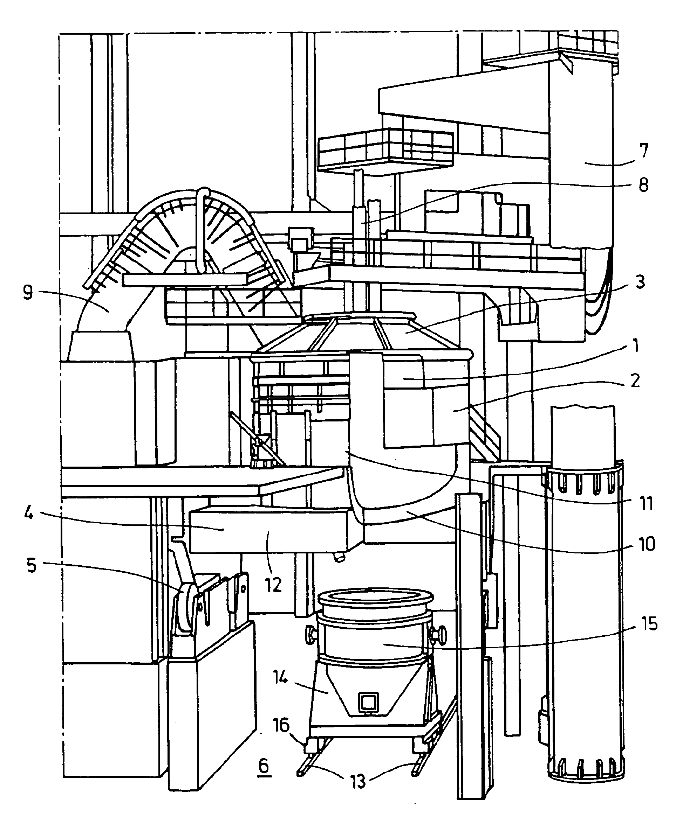

Mit der einzigen Figur ist ein Elektrolichtbogenofen 1 gezeigt, der auch Teil einer Doppelofenanlage sein kann. Der Ofen 1, der sich aus einem Ofengefäß 2 und einem Deckel 3 zusammensetzt, ist auf einem Schwenkrahmen 4, der wippenartig auf Rollen 5 gelagert ist, mit Abstand zum Hallenboden 6 angeordnet. Auf dem Hallenboden 6 ist ein vertikal verfahrbarer und bei einer Doppelofenanlage zusätzlich mit um seine Längsachse schwenkbarer Tragarm 7 für mindestens eine ― hier drei - Elektroden 8 angeordnet, die die elektrische Schmelzenergie für das Schmelzgut liefern. Entstehende Gase werden über eine Abgasleitung 9 abgeführt. Seitlich in der Ofengefäßwand, oberhalb des Ofenbodens 10, ist eine Abschlacktür 11 eingelassen, während sich auf der anderen Ofenseite eine Abstechöffnung (verdeckt) für die Schmelze befindet. Das Abstechen der Schmelze kann auch durch eine bodenmittig oder exzentrisch angeordnete Bodenabstichöffnung erfolgen.

Unterhalb der Ofenplattform 12 des Schwenkrahmens 4 ist auf dem Hallenboden 6 eine Schienenspur 13 verlegt, wobei ein Transferwagen 14, der eine herkömmliche Stahlpfanne 15 aufnimmt, mit entsprechenden Rollen 16 entlang dieser Schienen 13 verfahrbar ist. Die Schienenbahn verläuft wenigstens zwischen der Position des Transferwagens mit darüber angeordneter Abschlacktür 11 (Abschlackposition der Pfanne) sowie der Abstechöffnung des Ofens (Abstech- und Durchmischungsposition der Pfanne).

Das Verfahren zur Reduktion der Schlacke und Rückgewinnung des metallischen Chroms aus der Schlacke läuft nun wie folgt ab.

Der Ofen 1 wird mit Einschmelzmaterial, wie Schrott, Roheisen etc, bei verschwenktem Gefäßdeckel 3 gefüllt. Mit Hilfe der anschließend in das Ofengefäß eingeführten Elektroden 8 wird das Material eingeschmolzen. Die sich bildende Schlacke wird nach einer bestimmten Reaktionszeit durch den in der Charge enthaltenen Kohlenstoff oder das Silizium teilweise reduziert. Gleichzeitig oder alternativ kann die Teil-Schlackenreduktion auch mittels separat eingeführter Reduktionsmittel durchgeführt werden. Reduktionsmittel wie Kohlenstoff, Silizium und/oder Aluminium werden durch geeignete Vorrichtungen (nicht gezeigt), wie eine Lanze oder mittels einer separaten Chargiereinrichtung (nicht gezeigt) über das 5. Loch eingeführt.

Anschließend wird diese teilreduzierte Schlacke, d.h. die Reduktions-Prozesse sind noch nicht vollständig abgelaufen, in die Stahlpfanne 15 abgestochen, die hierzu mittels des Transferwagens 14 in ihre Abschlackposition unterhalb der Abschlacktür 11 verfahren wird.

Um den Reduktionsgrad zu steigern, können während des Abschlackens der Schlacke dieser weitere Reduktionsmittel zugegeben. Die Reduktionsmittel werden dann unmittelbar in den Schlackenstrahl gegeben. Es ist ebenso möglich, die leere Pfanne 15 entsprechend vorzubereiten, indem Reduktionsmittel auf den Pfannenboden gegeben wird.

Anschließend wird die mit der teilreduzierten Schlacke zu einem Teil gefüllte Pfanne 15 von ihrer Abschlackposition in ihre Abstichposition entlang der Schienenspur bzw. -bahn 13 verfahren. Die Schmelze wird auf die teilreduzierte Schlakke in der Stahlpfanne 15 abgestochen. Aufgrund des Einfüllvorgangs wird eine starke Durchmischung zwischen der Schmelze mit der teilreduzierten Schlacke bewirkt. Die Reaktionsoberfläche zwischen Metall und Schlacke wird erhöht, so dass die Reaktionen an der Phasengrenze beschleunigt ablaufen können. Es findet eine erneute Reduktion der Schlacke unter Rückgewinnung des metallischen Chroms statt.

Anschließend wird die Schlacke dann von der Schmelze abgezogen, beispielsweise auf dem Transferweg der Pfanne zu einer Vakuumbehandlungs-Anlage.

Sofern das Verfahren Verwendung in einer Doppelofenanlage findet, ist jedem Ofen eine Pfanne mit separatem Schienenpaar und Transferwagen zugeordnet. Ansonsten laufen die Vorgänge wie oben beschrieben ab.

Das erfindungsgemäße Verfahren mit hohem Wirkungsgrad einer Reduktion der in der Schlacke enthaltenen Metalloxide, insbesondere Chromoxide, ist nicht auf den Einsatz bei Elektrolichtbogenöfen beschränkt. Das Verfahren kann in jedem anderen metallurgischen Gefäß durchgeführt werden, wobei dieses entsprechend der Bewegungsfreiheit der Pfanne oberhalb des Hüttenflurs anzuordnen ist.

### Bezugszeichenliste:

- 1: Elektrolichtbogenofen
- 2: Ofengefäß
- 3: Deckel
- 4: Schwenkrahmen
- 5: Rollen
- 6: Hallenboden
- 7: Tragarm
- 8: Elektroden
- 9: Abgasleitung
- 10: Ofenboden
- 11: Abschlacktür
- 12: Ofenplattform des Schwenkrahmens
- 13: Schienenspur
- 14: Transferwagen
- 15: Stahlpfanne
- 16: Rollen an Transferwagen

## Patentansprüche

1. Verfahren zur Rückgewinnung von metallischen Elementen, insbesondere metallischem Chrom, aus metalloxidhaltigen Schlacken, während des Herstellungsprozesses von insbesondere chromhaltigen Stählen in einem Elektrolichtbogenofen (1),
**gekennzeichnet durch folgende Schritte:**
- nach dem Einschmelzen des chargierten Einschmelzmaterials Durchführung einer nur teilweisen Reduktion der Schlacke;
- Abstechen der teilweise reduzierten Schlacke unmittelbar in eine unterhalb des Ofens (1) in ihrer Abschlackposition angeordneten Pfanne (15),
- anschließendes Abstechen der Schmelze in diese Pfanne (15), die mit der teilweise reduzierten Schlacke gefüllt ist, wobei die Schlacke aufgrund des Einfüllvorgangs mit der damit verbundenen intensiven Durchmischung von Schlacke und Schmelze weiter reduziert wird.

2. Verfahren nach Anspruch 1,
**dadurch gekennzeichnet,**
**dass** die Schlacke durch eine Abschlacktür (11) des Elektrolichtbogenofen (1) unmittelbar in die Pfanne (15), die unterhalb der Abschlacktür (11) des Ofens in ihrer Abschlackposition angeordnet ist, abgestochen wird, und dass anschließend die Pfanne (15) von dieser Abschlackposition zu ihrer Abstech- und Durchmischungsposition unterhalb des Elektrolichtbogenofen (1) verfahren wird.

3. Verfahren nach Anspruch 1 oder 2,
**dadurch gekennzeichnet,**
**dass** die Pfanne (15) mittels eines Transferwagens (14), der unterhalb des Elektrolichtbogenofens (1) verfahrbar ist, von ihrer Abschlackposition in die Abstech- und Durchmischungsposition verfahren wird.

4. Verfahren nach einem der Ansprüche 1 bis 3,
**dadurch gekennzeichnet,**
**dass** die beim Einschmelzen neu gebildete und/oder eine bereits im Ofen vorhandene Schlacke teilreduziert wird.

5. Verfahren nach einem Ansprüche 1 bis 4,
**dadurch gekennzeichnet,**
**dass** die Teilreduktion der Schlacke im Elektrolichtbogenofen (1) mit dem in der Einschmelzcharge enthalten Kohlenstoff und Silizium durchgeführt wird.

6. Verfahren nach einem der Ansprüche 1 bis 5,
**dadurch gekennzeichnet,**
**dass** die Teilreduktion der Schlacke im Elektrolichtbogenofen (1) durch Einsatz von Reduktionsmitteln, wie Kohlenstoff, Silizium und/oder Aluminium, durchgeführt wird, die in den Elektrolichtbogenofen (1) injiziert oder durch eine Öffnung in der Ofenwand chargiert werden.

7. Verfahren nach einem der Ansprüche 1 bis 6,
**dadurch gekennzeichnet,**
**dass** der Schlacke Reduktionsmittel, wie Kohlenstoff, FeSi und/oder Aluminium, während des Abschlackens zugegeben werden.

8. Verfahren nach Anspruch 7,
**dadurch gekennzeichnet,**
**dass** die Reduktionsmittel in die noch leere Pfanne (15) gegeben oder direkt in den Schlackefluss zugegeben werden.

9. Verfahren nach einem der Ansprüche 1 bis 8,
**dadurch gekennzeichnet,**
**dass** die Durchmischung von Schlacke und Schmelze in der Pfanne durch ein in der Pfanne angeordnetes Bodenrührsystem unterstützt wird.

10. Verfahren nach einem der vorhergehenden Ansprüche,
**dadurch gekennzeichnet,**
**dass** es in einer Anlage mit zwei benachbart zueinander angeordneten Elektrolichtbofenöfen jeweils zeitversetzt in den jeweiligen Öfen durchgeführt wird.

## Claims

1. Method for recovery of metallic elements, particularly metallic chromium, from slags containing metal oxide, during the production process of steels, particularly those containing chromium, in an electric arc furnace (1), **characterised by** the following steps:
- after melting in of the charged melt materials, carrying out an only partial reduction of the slag;
- tapping off the partly reduced slag directly into a ladle (15) arranged below the furnace (1) in its slag removal position, and
- subsequent tapping off the melt into this ladle (15), which is filled with the partly reduced slag, wherein the slag during the filling process is further reduced by the intensive thorough mixing, which is connected therewith, of slag and melt.

2. Method according to claim 1, **characterised in that** the slag is tapped off through a slag removal door (11) of the electric arc furnace (1) directly into the ladle (15) arranged below the slag removal door (11) of the furnace in its slag removal position and that subsequently the ladle (15) is moved from this slag removal position to its tapping-off and thorough-mixing position below the electric arc furnace (1).

3. Method according to claim 1 or 2, **characterised in that** the ladle (15) is moved by means of a transfer carriage (14), which is movable below the electric arc furnace (1), from its slag removal position to the tapping-off and thorough-mixing position.

4. Method according to one of claims 1 to 3, **characterised in that** the slag newly formed during the melting in and/or already present in the furnace is partly reduced.

5. Method according to one of claims 1 to 4, **characterised in that** the partial reduction of the slag in the electric arc furnace (1) is carried out with the carbon and silicon contained in the melting-in charge.

6. Method according to one of claims 1 to 5, **characterised in that** the partial reduction of the slag in the electric arc furnace (1) is carried out by addition of reduction agents such as carbon, silicon and/or aluminium, which is or are injected into the electric arc furnace (1) or charged via an opening in the furnace wall.

7. Method according to one of claims 1 to 6, **characterised in that** reduction agents such as carbon, FeSi and/or aluminium is or are added to the slag during the slag removal.

8. Method according to claim 7, **characterised in that** the reduction agent is placed in the still empty ladle (15) or added directly to the slag flow.

9. Method according to one of claims 1 to 8, **characterised in that** the thorough mixing of slag and melt in the ladle is assisted by a base agitating system arranged in the ladle.

10. Method according to one of the preceding claims, **characterised in that** it is carried out in a plant with two electric arc furnaces, which are arranged adjacent to one another, respectively offset in time in the respective furnace.

## Revendications

1. Procédé pour la récupération d'éléments métalliques, en particulier du chrome métallique à partir de laitiers contenant des oxydes métalliques pendant le processus de fabrication en particulier d'aciers contenant du chrome dans un four électrique à arcs (1),
**caractérisé par** des étapes suivantes :
- après la fusion du matériau chargé, réalisation d'une réduction partielle du laitier;
- rejet du laitier partiellement réduit directement dans une poche de coulée (15) disposée en dessous du four (1) dans sa position de décrassage,
- ensuite rejet de la fusion dans cette poche (15) qui est remplie de laitier partiellement réduit, le laitier étant réduit davantage en raison de l'opération de remplissage avec mélange intensif du laitier et de la fusion.

2. Procédé selon la revendication 1, **caractérisé en ce que** le laitier est rejeté par une porte de coulée (11) du four électrique à arc (1) directement dans la poche (15) qui est disposée en dessous de la porte de coulée (11) dans sa position de décrassage et **en ce qu'**ensuite la poche (15) est déplacée de cette position de décrassage dans sa position de mélange et de rejet en dessous du four électrique à arcs (1).

3. Procédé selon la revendication 1 ou 2, **caractérisé en ce que** la poche (15) est déplacée au moyen d'un chariot de transfert (14) qui est mobile en dessous du four électrique à arc (1), de sa position de décrassage dans sa positon de mélange et de rejet.

4. Procédé selon l'une des revendications 1 à 3, **caractérisé en ce que** le laitier, se trouvant dans le four ou nouvellement formé lors de la fusion, est réduit partiellement.

5. Procédé selon l'une des revendications 1 à 4, **caractérisé en ce que** la réduction partielle du laitier est réalisée dans le four électrique à arcs (1) avec le carbone ou le silicium contenu dans la charge de fusion.

6. Procédé selon l'une des revendications 1 à 5, **caractérisé en ce que** la réduction partielle du laitier est réalisée dans le four électrique à arcs (1) par emploi d'agents réducteurs, tels que le carbone, le silicium et/ou l'aluminium qui sont injectés dans le four électrique à arcs (1) ou sont chargés par une ouverture dans la paroi de four.

7. Procédé selon l'une des revendications 1 à 5, **caractérisé en ce qu'**il est ajouté au laitier des agents réducteurs tels que le carbone, FeSi et/ou l'aluminium pendant le décrassage.

8. Procédé selon la revendication 7, **caractérisé en ce que** les moyens de réduction sont ajoutés dans la poche encore vide (15) ou directement ajoutée dans le flux de laitier.

9. Procédé selon l'une des revendications 1 à 8, **caractérisé en ce que** le mélange de laitier et de masse fondue est soutenu par un système de mélange placé au fond de la poche.

10. Procédé selon l'une des revendications précédentes, **caractérisé en ce qu'**il est exécuté dans une installation avec deux fours électriques à arcs disposés respectivement différés dans le temps dans les fours respectifs.
